(19) **Europäisches Patentamt**
**European Patent Office**
**Office européen des brevets**

(11) **EP 2 790 399 A1**

(12) **EUROPEAN PATENT APPLICATION**
published in accordance with Art. 153(4) EPC

(43) Date of publication:
**15.10.2014 Bulletin 2014/42**

(21) Application number: **12855320.3**

(22) Date of filing: **22.10.2012**

(51) Int Cl.:
**H04N 5/351** (2011.01)    **H04N 5/243** (2006.01)

(86) International application number:
**PCT/JP2012/077193**

(87) International publication number:
**WO 2013/084605 (13.06.2013 Gazette 2013/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2011 JP 2011268692**

(71) Applicant: **Sony Corporation**
**Tokyo 108-0075 (JP)**

(72) Inventors:
• **YAMAMOTO, Keitaro**
**Tokyo 108-0075 (JP)**
• **BABA, Shigeyuki**
**Tokyo 108-0075 (JP)**
• **ITO, Masahiro**
**Tokyo 108-0075 (JP)**
• **OONO, Shin**
**Yokohama-shi**
**Kanagawa 240-0005 (JP)**

(74) Representative: **Ealey, Douglas Ralph**
**D Young & Co LLP**
**120 Holborn**
**London EC1N 2DY (GB)**

(54) **IMAGE PROCESSING DEVICE, IMAGE PROCESSING METHOD, AND PROGRAM**

(57) An apparatus and a method capable of effectively eliminating flicker are provided. Flicker which occurs in a captured image captured under a lighting environment such as a fluorescent light having a luminance change is effectively eliminated or reduced. A short exposure image and a long exposure image, which are images captured with at least two different exposure periods, are input, a short exposure image row profile having integrated values of a row-by-row signal quantity of the short exposure image and a reference profile having integrated values of a row-by-row signal quantity of the long exposure image are generated, a flicker correction waveform is generated by a division process on the short exposure image row profile by the reference profile or the like, and a corrected image is generated whose flicker components have been eliminated by a process of multiplying pixel values of each of the rows of the short exposure image by a row-by-row coefficient defined by the flicker correction waveform.

*FIG. 4*

EP 2 790 399 A1

**EP 2 790 399 A1**

**Description**

TECHNICAL FIELD

The present disclosure relates to an image processing apparatus, an image processing method, and a program, and more particularly, relates to an image processing apparatus, an image processing method, and a program which perform flicker correction.

BACKGROUND ART

When an image is captured by a camera having an imaging device of an XY address scanning type, such as a complementary metal oxides semiconductor (CMOS) imaging device under illumination of a fluorescent light, luminance non-uniformity or color non-uniformity in a stripe pattern occurs in an image signal. In particular, when video is captured and displayed on a display device, a phenomenon in which a stripe pattern having low and high luminance portions flows on the screen is observed. This is called flicker.

Flicker occurs due to the fact that a fluorescent light connected to a commercial power source (alternating current) repeats blinking on and off with a cycle which is basically twice that of a power supply frequency, and also due to the operating principle of imaging devices.

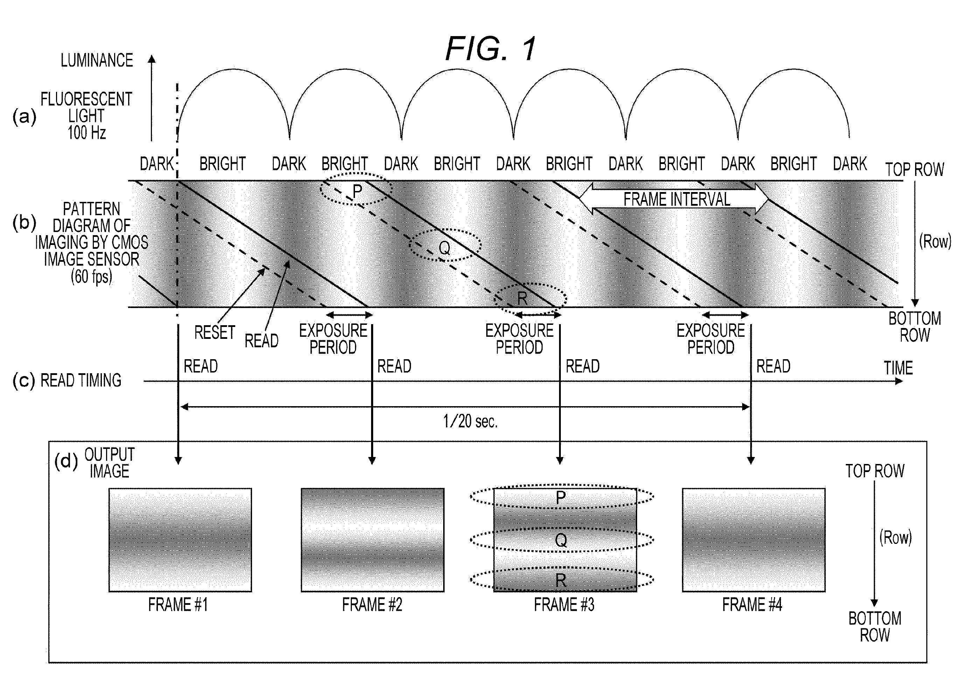

The principle on which flicker occurs in a captured image captured by a CMOS image sensor will now be described with reference to Fig. 1. Fig. 1 illustrates the following data:

(a) Change in luminance of a fluorescent light,
(b) Pattern diagram of an imaging (exposure) sequence of a CMOS image sensor,
(c) Read timings of a CMOS image, and
(d) Overview of output images.

In Fig. 1, time (t) advances from left to right.

It is assumed that the fluorescent light operates in areas of 50 Hz commercial power sources. In such case, the fluorescent light repeats blinking on and off at a frequency of 100 Hz, which is twice the power supply frequency (50 Hz). The arc-shaped curves shown in (a) represent a luminance change of the fluorescent light. The luminance change occurs at 100 Hz, that is, with a cycle time in units of 1/100 seconds.

Under such a lighting environment, images are captured using a CMOS image sensor having a rolling shutter at a frame rate of 60 frames per second. An exposure process is performed sequentially in time from the top row to the bottom row of each captured frame.

In the pattern diagram of imaging by the CMOS image sensor shown in (b), a dashed diagonal line represents reset timing of the image sensor, and a solid diagonal line represents read timing. An exposure process is started after a reset indicated by a dotted line, and the time period to the read timing indicated by the solid line is the exposure period. The rolling shutter causes the exposure process to be performed from upper scan lines to lower scan lines in a frame.

A region between two solid diagonal lines adjacent to each other represents one frame of the image sensor. During an exposure period between a dashed line and a solid line, a change in the luminance occurs corresponding to a change in the luminance of the light. That is, since the exposure timing is different for each row included in an image frame, the effect of the light source having a luminance change causes a horizontal stripe pattern of non-uniformity, so called flicker, to occur as shown in the output images (d) of Fig. 1.

The output image part (d) of Fig. 1 illustrates four consecutively captured images from frame #1 to frame #4. They are image frames #1 to #4 included in a video captured at a frame rate of 60 frames per second (60 fps).

On frame #3, a top portion P, a middle portion Q, and a bottom portion R are indicated. These are shown to clearly indicate the portions corresponding to the exposure periods P, Q, and R in the pattern diagram of imaging by the CMOS image sensor shown in (b).

The top portion P of frame #3 is a row portion which has been exposed while the luminance of the fluorescent light is high.

The middle portion Q of frame #3 is a row portion which has been exposed while the luminance of the fluorescent light changes from low to high.

The bottom portion R of frame #3 corresponds to a row portion which has been exposed while the luminance of the fluorescent light is low. In this way, since the luminance of the fluorescent light during the exposure period of each row is not the same, a stripe pattern based on luminance non-uniformity and/or on color non-uniformity occurs.

Note that a typical imaging device is configured such that light having one of, for example, RGB wavelengths is selectively input for each of the constituting pixels of the imaging device. For example, Bayer pattern is known as such an RGB pattern. When an image is captured, for example, using a color image sensor having a Bayer pattern or the

2

like, wavelength dependence of afterglow characteristics of fluorescent material in the fluorescent light causes flicker to have different effects for each of the color signals (color channels), and thus color non-uniformity occurs due to difference in the amplitude and/or in the phase.

Examples of conventional technologies disclosing so called "flicker correction" for compensating for degradation in image quality due to such flicker include, for example, the following conventional technologies.

Patent Document 1 (JP 11-122513 A) discloses a configuration such that signal intensity distributions, each of which is generated by integrating in the horizontal direction pixel value of a previous image captured prior to a flicker-corrected image, are further integrated for a plurality of images (for one cycle of flicker), and a ratio between the mean intensity distribution obtained and the intensity distribution of a current image to be corrected is calculated; and based on this ratio, a correction waveform (flicker correction waveform) for correcting, for example, row-by-row intensity of an image is generated, and correction of the intensity of each row of the current image is performed as flicker correction by applying this correction waveform.

However, when this flicker correction is applied, the image to be corrected and the previous images to be integrated all need to be captured of a same scene (stationary scene).

Thus, if a capture condition involves flicker of a long cycle, a long-time stationary scene is required, which is difficult to implement in practice. Moreover, a problem also exists in that a long time is required before correction is started.

Moreover, if a flicker correction waveform is obtained from an intensity distribution of an image as in Patent Document 1 (JP 11-122513 A) described above, a saturated portion or a dark portion contained in the image will present a problem in that an accurate correction waveform cannot be obtained.

Furthermore, a technique for obtaining a flicker correction waveform from intensity distributions of a plurality of previous captured images requires that all the previous images to be integrated be captured of a same scene (stationary scene), as described above. Therefore, if a moving subject scene is included, an accurate flicker correction waveform cannot be obtained, thereby requiring measures to be taken, such as, for example, using a correction waveform obtained in advance with respect to a stationary scene. Nevertheless, since the phase of a flicker waveform shifts constantly, a correction waveform needs to be applied taking the phase into account. If correction is performed when the flicker correction waveform and the flicker waveform in the image do not match in phase, then the effects of flicker may rather be increased.

Among other conventional technologies, Patent Document 2 (JP 2002-165141 A) discloses a method for reducing the effects of flicker by making adjustments so that the exposure period is a multiple of the power supply frequency.

Although this method eliminates the need to integrate the intensity distributions of a stationary scene, it is practically difficult to exactly match the shutter speed to the power supply frequency, and thus small errors inevitably occur. As a result, flicker having a very long cycle (long-cycle flicker) occurs. Such flicker is more noticeable in captured images captured with short exposure periods.

Note that the flicker described referring to Fig. 1 is called short-cycle flicker. The types of flicker include short-cycle flicker described referring to Fig. 1, and long-cycle flicker described above.

That is, the short-cycle flicker described referring to Fig. 1 appears as non-uniformity in a captured image when captured with a shutter speed which is obviously shorter than the light-dark cycle of the fluorescent light. When the captured image is displayed as a video, a stripe pattern of bright and dark portions is relatively clearly seen, and is perceived as moving at a relatively fast speed.

In contrast, long-cycle flicker is image non-uniformity which appears in an image captured with a shutter speed close to the light-dark cycle of the fluorescent light, and is caused by the difference between the power supply frequency and the shutter speed. When the captured image is displayed as a video, this long-cycle flicker appears as a stripe pattern of bright and dark portions dully seen, and is perceived as a stripe pattern moving at a relatively slow speed.

CITATION LIST

PATENT DOCUMENTS

Patent Document 1: JP 11-122513 A
Patent Document 2: JP 2002-165141 A

SUMMARY OF THE INVENTION

PROBLEMS TO BE SOLVED BY THE INVENTION

The present disclosure has been made in view of, for example, the problems described above, and an object of the present disclosure is to provide an image processing apparatus, an image processing method, and a program which perform more precise flicker correction.

In addition, the configuration of one embodiment of the present disclosure provides an image processing apparatus, an image processing method, and a program which reduce processing load and perform precise flicker correction, for example, without performing an integration process of previous images or the like.

SOLUTIONS TO PROBLEMS

According to a first aspect of the present disclosure, there is provided an image processing apparatus including:

a signal processing unit configured to receive a short exposure image and a long exposure image, which are images captured with at least two different exposure periods, and perform a flicker correction process of eliminating a flicker component contained in the short exposure image, wherein
the signal processing unit
generates
a short exposure image row profile having integrated values of a row-by-row signal quantity of the short exposure image, and
a reference profile having integrated values of a row-by-row signal quantity of the long exposure image,
generates a flicker correction waveform by data processing including a division process on the short exposure image row profile by the reference profile, and
generates a corrected image whose flicker component has been eliminated by a process of multiplying pixel values of each of rows of the short exposure image by a row-by-row coefficient corresponding to the flicker correction waveform.

Further, in the image processing apparatus according to one embodiment of the present disclosure, the long exposure image is an image captured using a setting of the exposure period which is approximately equal to an integral multiple of a luminance change cycle of an image capture environment.

Further, in the image processing apparatus according to one embodiment of the present disclosure, in a generation process of the flicker correction waveform, the signal processing unit generates the flicker correction waveform by performing a sinusoidal approximation process on flicker component data obtained by the division process on the short exposure image row profile by the reference profile, or on phase-inverted data with respect to the flicker component data.

Further, in the image processing apparatus according to one embodiment of the present disclosure, in a generation process of the flicker correction waveform, the signal processing unit generates the flicker correction waveform by performing a spline interpolation process on flicker component data obtained by the division process on the short exposure image row profile by the reference profile, or on phase-inverted data with respect to the flicker component data.

Further, in the image processing apparatus according to one embodiment of the present disclosure, in a generation process of the flicker correction waveform, the signal processing unit generates the flicker correction waveform by performing a linear interpolation process on flicker component data obtained by the division process on the short exposure image row profile by the reference profile, or on phase-inverted data with respect to the flicker component data.

Further, in the image processing apparatus according to one embodiment of the present disclosure, in a generation process of the flicker correction waveform, the signal processing unit performs discrete Fourier transform on flicker component data obtained by the division process on the short exposure image row profile by the reference profile, or on phase-inverted data with respect to the flicker component data, and reclassifies second-and higher-order components as a lower order.

Further, in the image processing apparatus according to one embodiment of the present disclosure, in a generation process of the corrected image whose flicker component has been eliminated, the signal processing unit performs the process of multiplying pixel values of each of rows of the short exposure image by a row-by-row coefficient corresponding to the flicker correction waveform after phase matching for aligning a peak location of a row profile of an image to be corrected with a peak location of the flicker correction waveform.

Further, in the image processing apparatus according to one embodiment of the present disclosure, the signal processing unit determines whether each image contains a moving subj ect or not, and performs a generation process of the flicker correction waveform by applying an image determined to contain no moving subjects.

Further, in the image processing apparatus according to one embodiment of the present disclosure, the signal processing unit determines whether or not a short exposure image to be corrected contains a moving subject, and performs image correction applying the flicker correction waveform to an image determined to contain no moving subjects.

Further, in the image processing apparatus according to one embodiment of the present disclosure, the signal processing unit determines whether or not a short exposure image to be corrected contains a moving subject, and with respect to an image determined to contain a moving subject, modifies the flicker correction waveform taking into account a phase variation in a row profile due to an effect of the moving subject, and performs image correction applying a modified flicker correction waveform.

Further, in the image processing apparatus according to one embodiment of the present disclosure, the signal processing unit determines whether or not a short exposure image to be corrected contains a moving subject, and with respect to an image determined to contain a moving subject, clips the flicker correction waveform so as to align in phase with the image containing a moving subj ect based on an inter-frame phase mismatch calculated based on a still image, and performs image correction applying a clipped flicker correction waveform.

According to a second aspect of the present disclosure, there is provided an image processing method performed in an image processing apparatus, including:

performing a signal processing step in which a signal processing unit receives a short exposure image and a long exposure image, which are images captured with at least two different exposure periods, and performs a flicker correction process of eliminating a flicker component contained in the short exposure image, wherein the signal processing step includes performing

a generation process of a short exposure image row profile having integrated values of a row-by-row signal quantity of the short exposure image, and a reference profile having integrated values of a row-by-row signal quantity of the long exposure image,

a generation process of a flicker correction waveform by data processing including a division process on the short exposure image row profile by the reference profile, and

a generation process of a corrected image whose flicker component has been eliminated by a process of multiplying pixel values of each of rows of the short exposure image by a row-by-row coefficient corresponding to the flicker correction waveform.

According to a third aspect of the present disclosure, there is provided a program for implementing a flicker correction process of eliminating a flicker component contained in an image in an image processing apparatus, wherein the program

causes a signal processing unit to receive a short exposure image and a long exposure image, which are images captured with at least two different exposure periods, and

instructs the signal processing unit to perform

a generation process of a short exposure image row profile having integrated values of a row-by-row signal quantity of the short exposure image, and a reference profile having integrated values of a row-by-row signal quantity of the long exposure image,

a generation process of a flicker correction waveform by data processing including a division process on the short exposure image row profile by the reference profile, and

a generation process of a corrected image whose flicker component has been eliminated by a process of multiplying pixel values of each of rows of the short exposure image by a row-by-row coefficient corresponding to the flicker correction waveform.

Note that the program of the present disclosure is, for example, a program provided by means of, for example, storage media for information processing devices and/or computer systems capable of executing various program codes. By running such a program in a program execution unit in an information processing device or in a computer system, processes dependent on the program are implemented.

Still other obj ects, features and advantages of the present disclosure will become apparent from the following more detailed description based on the embodiments of the present disclosure and the accompanying drawings. Note that as used in the specification, a system refers to a logical set of a plurality of apparatuses, and is not limited to an apparatus that houses elements in the same casing.

EFFECTS OF THE INVENTION

According to the configuration of one embodiment of the present disclosure, an apparatus and a method capable of effectively eliminating flicker are provided.

Specifically, flicker which occurs in a captured image captured under a lighting environment such as a fluorescent light having a luminance change is effectively eliminated or reduced. A short exposure image and a long exposure image, which are images captured with at least two different exposure periods, are input, a short exposure image row profile having integrated values of a row-by-row signal quantity of the short exposure image and a reference profile having integrated values of a row-by-row signal quantity of the long exposure image are generated, a flicker correction waveform is generated by a division process on the short exposure image row profile by the reference profile or the like, and a corrected image is generated whose flicker components have been eliminated by a process of multiplying pixel values of each of the rows of the short exposure image by a row-by-row coefficient defined by the flicker correction waveform.

These processes achieve an apparatus and a method capable of eliminating flicker effectively.

BRIEF DESCRIPTION OF DRAWINGS

Fig. 1 is a diagram illustrating the effects of flicker on an image.

Fig. 2 is a diagram illustrating an example configuration of an image processing apparatus.

Fig. 3 is a diagram illustrating a relationship between the cycle of a fluorescent light and image capture timings.

Fig. 4 is a diagram illustrating a sequence of a flicker correction process.

Fig. 5 is a diagram illustrating a row profile.

Fig. 6 is a diagram illustrating an example of row profiles of a short exposure image and of a long exposure image.

Fig. 7 is a diagram illustrating extraction of flicker components and a generation process of flicker correction coefficients (flicker correction waveforms).

Fig. 8 is a diagram illustrating extraction of flicker components and a generation process of flicker correction coefficients (flicker correction waveforms).

Fig. 9 is a diagram illustrating a generation process of a flicker correction waveform.

Fig. 10 is a diagram illustrating a waveform extraction process of one cycle from the flicker correction waveform.

Fig. 11 is a diagram illustrating a sinusoidal approximation process on a flicker correction waveform.

Fig. 12 is a diagram illustrating an image correction process using a flicker correction waveform.

Fig. 13 is a diagram illustrating an image correction process using a flicker correction waveform.

MODE FOR CARRYING OUT THE INVENTION

Details of an image processing apparatus, an image processing method, and a program according to the present invention will be described below with reference to the drawings. The description is organized into the following sections:

1. Concerning General Configuration and Processes of Image Processing Apparatus of the Present Disclosure
2. Concerning Details of Flicker Correction Process

    2-1. Concerning Row Profile Generation Process
    2-2. Concerning Flicker Correction Coefficient Calculation Process
    2-3. Concerning Moving Subject Detection Process
    2-4. Concerning Flicker Correction Process for Image Determined To Be A Still Image
    2-5. Concerning Flicker Correction Process for Image Containing Moving Subject

3. Summary of Configuration of the Present Disclosure

[1. Concerning General Configuration and Processes of Image Processing Apparatus of the Present Disclosure]

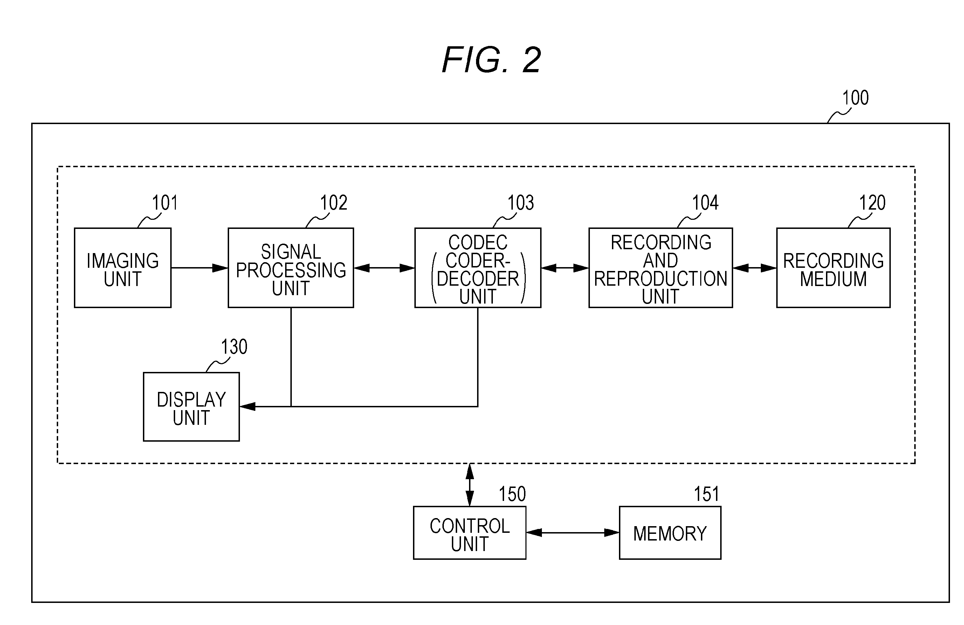

First, an example configuration of an imaging apparatus which is one embodiment of the image processing apparatus of the present disclosure will be described with reference to Fig. 2.

Fig. 2 is a block diagram illustrating the general configuration of an imaging apparatus 100 according to one embodiment of the present disclosure. The imaging apparatus 100 includes an imaging unit 101, a signal processing unit 102, a codec (coder-decoder unit) 103, a recording and reproduction unit 104, a recording medium 120, a display unit 130, a control unit 150, and a memory 151.

The imaging unit 101 includes a lens, an imaging device, or the like. The imaging device is a CMOS image sensor, which is an imaging device of an XY address scanning type. As described above with reference to Fig. 1, the CMOS image sensor, which is an imaging device of an XY address scanning type, performs an exposure process sequentially in time from the top row to the bottom row. An optical signal received by the CMOS image sensor is converted by photoelectric conversion to an electrical signal, which is then input to the signal processing unit 102.

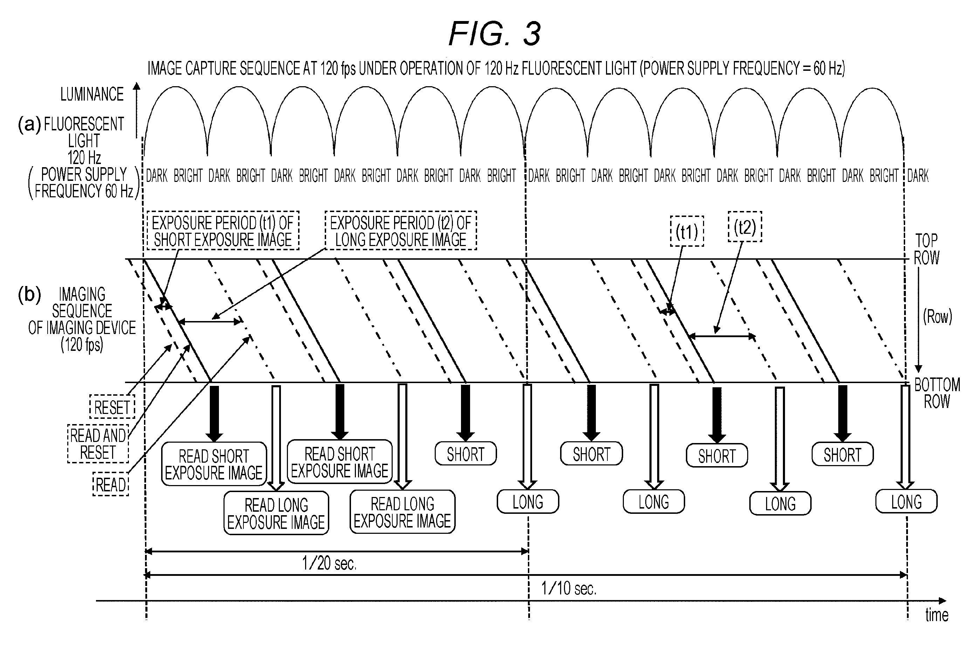

The signal processing unit 102 performs processes such as white balance adjustment, gamma correction, a demosaicing process, or the like which are performed as standard camera signal processing, and also performs a flicker correction process according to the present invention. Details of the configuration and processes of a flicker correction processing unit which performs a flicker correction process will be described later with reference to Fig. 3 and later Figures.

Data obtained as a result of signal processing in the signal processing unit 102 is input to the codec (coder-decoder unit) 103, and is also output to the display unit 130, in which a display process is performed. The codec 103 performs a predetermined coding process such as an MPEG coding process or the like, and outputs a processing result to the recording and reproduction unit 104.

The recording and reproduction unit 104 performs a recording process of a captured image on the recording medium 120 according to a predetermined recording format. The recording medium 120 is a data-recordable medium, such as a flash memory, a magnetic disk, an optical disk, or the like.

Note that, when an image recorded in the recording medium 120 is reproduced, the recording and reproduction unit 104 reads the data from the recording medium 120, and the data read is provided to the codec 103, in which a decoding process is performed. The image obtained as a result of the decoding process is displayed on the display unit 130.

Note that control of these components is performed by the control unit 150 according to the program stored in the memory 151. The control unit 150 includes a CPU having a program execution function. The memory 151 includes a RAM, a ROM, or the like.

The imaging apparatus 100 shown in Fig. 2 continually captures images with at least two different exposure periods, that is,

a short exposure image, and

a long exposure image.

In addition, the setting of one exposure period is set to the luminance change cycle or to an integral multiple of the luminance change cycle of the fluorescent light.

Note that such an image capture process with a plurality of different exposure periods is a technique used as a process for capturing an image in a wide dynamic range.

When capturing an image in a wide dynamic range, images are captured with the exposure period of the image sensor being changed periodically, and an image combination process dependent on the luminance level of each pixel or the like provides a wide dynamic range image. That is, a wide dynamic range image is generated by an image combination process in which pixel values of a long exposure image are applied in low-luminance pixel regions, and pixel values of a short exposure image are used in high-luminance pixel regions. Note that, when each pixel value is set, a pixel value calculation process for maintaining overall consistency is performed.

Such processes can provide a wide dynamic range image that cannot be obtained from a captured image captured with a fixed exposure period.

In such a generation process of a wide dynamic range image, performing flicker correction described below as a process before combining images captured with different exposure periods allows a wide dynamic range image having reduced flicker to be generated.

A corresponding relationship between an image capture sequence using different exposure periods and the waveform of a fluorescent light will now be described with reference to Fig. 3.

Fig. 3 illustrates a sequence when the imaging apparatus captures an image at a rate of 120 frames per second, that is 120 fps, under a fluorescent light operating by a power supply having a power supply frequency of 60 Hz.

Note that the luminance change cycle of a fluorescent light operating by a power supply having a power supply frequency of 60 Hz is 120 Hz, and thus a light-dark pattern is repeated at a frequency of 120 cycles per second.

The imaging apparatus repeatedly captures images with at least two or more different exposure periods:

a short exposure image with an exposure period (t1), and

a long exposure image with an exposure period (t2).

It is assumed that, in the imaging apparatus of the present disclosure, at least one image is captured using a setting of the exposure period which is approximately equal to an integral multiple of the luminance change cycle of the image capture environment.

The settings shown in Fig. 3 are those for alternately capturing short exposure images at a rate of 60 frames per second and long exposure images at a rate of 60 frames per second.

Here, the exposure period (t2) of a long exposure image is approximately equal to the luminance change cycle of the fluorescent light [1/120 (sec)]. That is,

$$t2 \approx 1/120 \ (sec).$$

This is the setting.

Although it is difficult to match the exposure period (t2) of a long exposure image exactly to 1/120 (sec), matching the exposure period (t2) of a long exposure image approximately to the luminance change cycle of the fluorescent light [1/120 (sec)] allows a long exposure image to be captured as an image that contains little effects of flicker.

In contrast, the exposure period (t1) of a short exposure image has a setting different from the luminance change cycle of the fluorescent light and from any multiple thereof, and thus a short exposure image is captured as an image which is affected by flicker.

The signal processing unit 102 of the imaging apparatus 100 shown in Fig. 2 performs flicker correction using images captured with settings of the plurality of these exposure periods.

Details of the flicker correction performed in the signal processing unit 102 will be described below.

[2. Concerning Details of Flicker Correction Process]

Details of the flicker correction performed in the signal processing unit 102 will now be described.

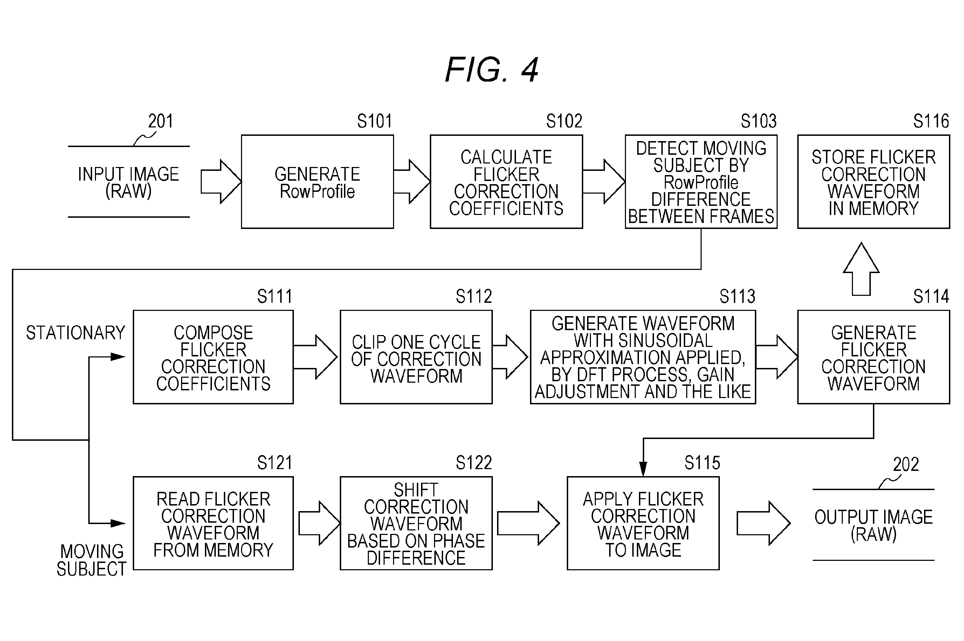

Fig. 4 is a diagram illustrating a sequence of a flicker correction process performed in the signal processing unit 102. In this regard, the sequence shown in Fig. 4 is performed, for example, by a processor in the signal processing unit 102 according to the program that defines processes of the respective steps (S101-) shown in Fig. 4; or may be performed using dedicated hardware for performing each process.

The signal processing unit 102 receives as an input image 201 a Raw image obtained by the image sensor included in the imaging unit 101, and performs a flicker correction process on the Raw image. Note that the Raw image is output data of the imaging unit 101, and is raw data before signal processing such as a demosaicing process is applied. A demosaicing process is a process to set, for example, the pixel values of all of RGB as the data corresponding to the respective pixels of the image sensor included in the imaging unit 101. The Raw data before the demosaicing process is performed is data in which only a pixel value of, for example, one of RGB is set for each pixel of the image sensor.

As shown in Fig. 4, the signal processing unit 102 uses the Raw image before the demosaicing process as the input image 201, and generates an output image 202 resulting from performing flicker correction on the input image 201. This process is, however, merely by way of example; the configuration may be such that the signal processing unit 102 receives a color image on which a demosaicing process has been performed, and performs a flicker correction process by performing processes similar to those described below, on the color image.

The sequence of flicker correction process shown in Fig. 4 will be described below sequentially following each process step.

[2-1. Concerning Row Profile Generation Process]

First, in step S101, a row profile for the input image 201 is generated.

A row profile is data representing the row-by-row signal quantity (intensity) of the captured image.

An integration process of signal values (pixel values) is performed for each of the color channels (RGB) in a horizontal direction of the Raw image 201, and thus a row-by-row one-dimensional signal quantity (intensity) is obtained. As described above, the Raw data is data in which only a pixel value of, for example, one of RGB is set for each pixel of the image sensor.

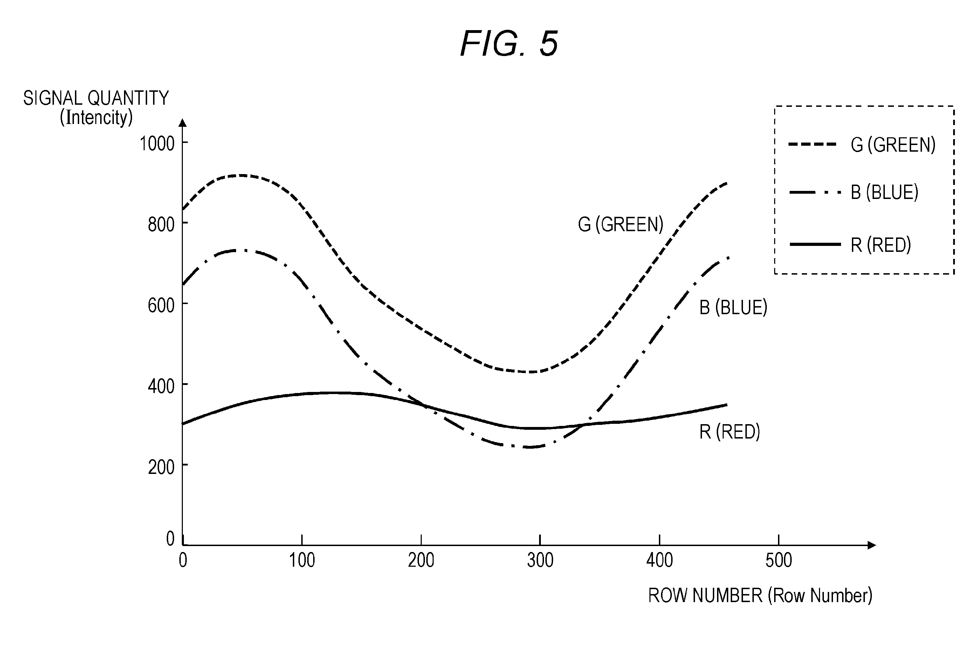

For example, the data shown in Fig. 5 is generated as the row profile.

A row profile is used as fundamental data for performing pixel value correction as flicker correction on a row-by-row basis.

Row profile generation and row-by-row flicker correction are performed on the assumption that the effects of flicker upon a captured image are approximately constant along the scan line (horizontal) direction of the image, and such a row-by-row process achieves a reduction in the amount of calculation in flicker correction as well as an enhancement of the process efficiency.

For example, an image sensor of a Bayer pattern type performs an integration process independently for each of the R, G, and B channels on a row-by-row basis, and obtains

signal quantities: RP_Rk(y), RP_Gk(y), and RP_Bk(y)

as row-by-row one-dimensional signal quantities (RP) for the respective RGB channels.

Note that k denotes the frame number of the image, and y denotes the vertical coordinate value of the image.

In this way, the signal processing unit 102 calculates

signal quantities: RP_Rk(y), RP_Gk(y), and RP_Bk(y)

for the input Raw image frame k on a row(y)-by-row(y) basis.

Note that there are two techniques for the processing techniques, that is,

(1) technique in which a process is performed individually for each of the color signal components, for example, each of the RGB color channels, and
(2) technique in which one signal quantity RPk(y) is calculated on a row-by-row basis without distinguishing color channels (for example, RGB), and using this, a common process is performed on the pixels associated with all the color channels.

Performing either process can provide an effective flicker reduction effect. Note that the process performed individually for each of the RGB color channels of (1) can enhance the reduction effect in color non-uniformity.

The row profile generation process may be performed using either of (1) and (2) described above.

As described above with reference to Fig. 3, an imaging apparatus of the present disclosure repeatedly captures images with at least two or more different exposure periods:

a short exposure image with an exposure period (t1), and
a long exposure image with an exposure period (t2).

The settings shown in Fig. 3 are those for alternately capturing short exposure images at a rate of 60 frames per second and long exposure images at a rate of 60 frames per second.

Here, the exposure period (t2) of a long exposure image is approximately equal to the luminance change cycle of the fluorescent light. That is,

$$t2 \approx 1/120 \ (sec).$$

This is the setting. Therefore, a long exposure image is captured as an image that contains little effects of flicker.

In contrast, the exposure period (t1) of a short exposure image has a setting different from the luminance change cycle of the fluorescent light and from any multiple thereof, and thus a short exposure image is captured as an image which is affected by flicker.

As a result,
the row profile of a short exposure image is a row profile containing the effects of flicker.

In contrast, the row profile of a long exposure image is a row profile containing little effects of flicker.

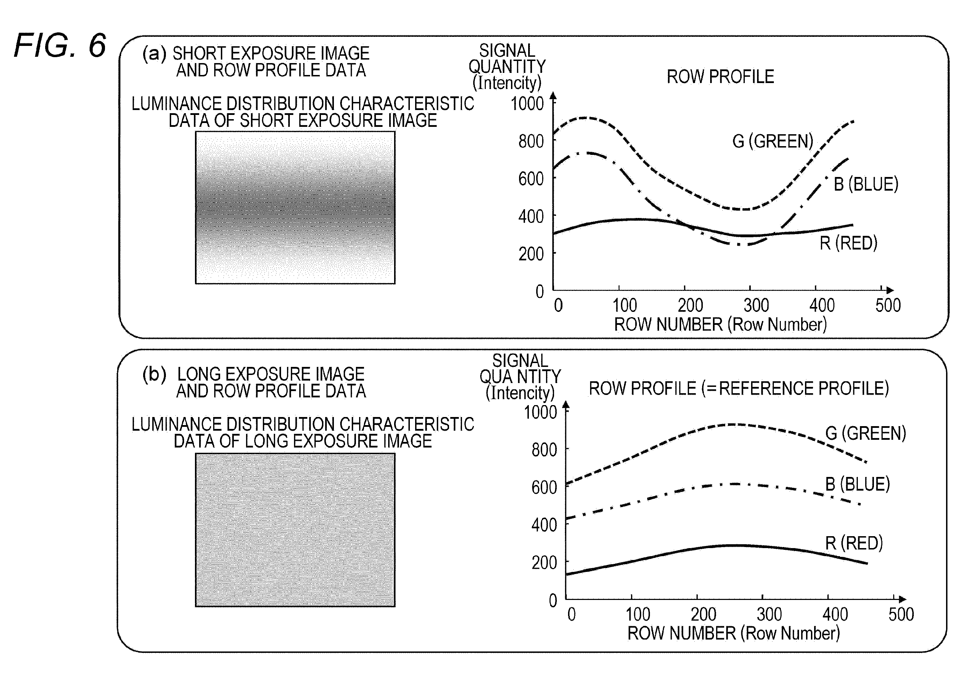

Referring to Fig. 6, an example of the row profile of a short exposure image and the row profile of a long exposure image will be described. Fig. 6 illustrates

(a) luminance distribution characteristic data of a short exposure image, and the row profile of the short exposure image, and
(b) luminance distribution characteristic data of a long exposure image, and the row profile of the long-short exposure image.

The row profile of a short exposure image shown in Fig. 6(a) is a row profile which is significantly affected by flicker. It is inferred that the depression in the center portion of rows and the rise in both ends in each of the signal quantities of RGB are due to the effects of flicker.

In contrast, the row profile of a long exposure image shown in Fig. 6(b) is a row profile containing little effects of flicker. Each of the signal quantities of RGB is generally constant over all the rows, and no significant change is seen. It is inferredthat a change in the signal quantity due to the effects of flicker is hardly occurring.

In step S101 of the sequence diagram shown in Fig. 4, the row profiles are sequentially generated for respective captured images of the short exposure images and of the long exposure images.

For example, in the image capture sequence described above with reference to Fig. 3, that is, in the sequence in which
a short exposure image of an exposure period (t1), and
a long exposure image of an exposure period (t2)
are alternately captured, the following processes are repeatedly performed:

generation of the row profile of a short exposure image,
generation of the row profile of a long exposure image,
generation of the row profile of a short exposure image,
generation of the row profile of a long exposure image,

[2-2. Concerning Flicker Correction Coefficient Calculation Process]

Next, in step S102, flicker correction coefficients are calculated. Note that in this embodiment, significant effects of flicker appear in short exposure images, and thus the flicker correction coefficients corresponding to each of the short exposure images are calculated.

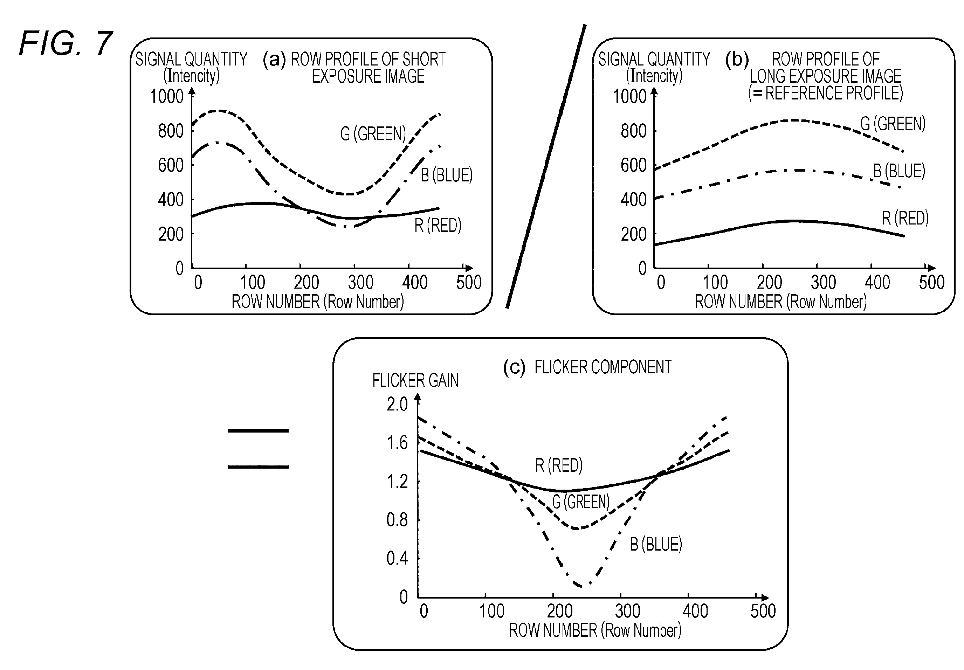

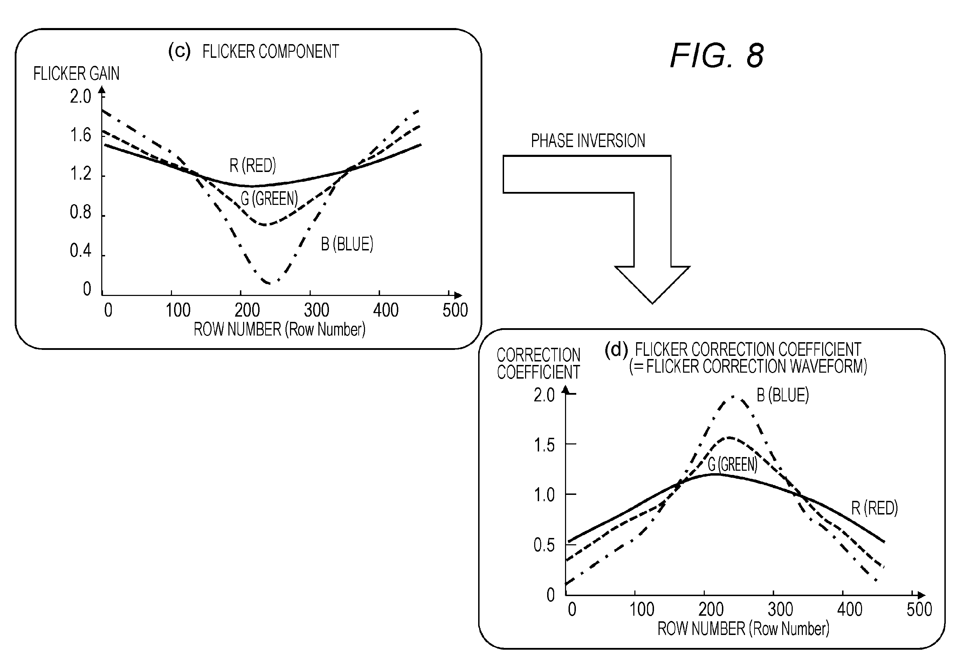

The calculation process of a flicker correction coefficient will be described with reference to Figs. 7 and 8.

Fig. 7 illustrates

(a) the row profile of a short exposure image for which flicker correction coefficients are calculated,

(b) the row profile of a long exposure image as the reference profile for being applied to the flicker correction coefficient calculation, and

(c) flicker component data corresponding to (a) short exposure image, obtained by a division process of (a)/(b).

Note that the flicker gain shown along the vertical axis of Fig. 7 (c) is defined as follows:

```
flicker gain = 1/correction coefficient.
```

Moreover, Fig. 8 illustrates

(c) flicker component data corresponding to (a) short exposure image, obtained by the division process of (a)/(b), which is similar to that of Fig. 7(c), and

(d) flicker correction coefficients ($\approx$ flicker correction waveforms) generated by an inversion process on the phase of the flicker components shown in (c).

The row profile of a short exposure image for which the flicker correction coefficients are calculated, shown in Fig. 7(a), is divided by the row profile (reference profile) of the long exposure image captured immediately before or after the short exposure image (the division process is performed on the signal quantities corresponding to each other in color and row).

That is, the divisor is the row profile (reference profile) of the long exposure image shown in Fig. 7(b). The flicker component data shown in Fig. 7(c) are obtained by this division process.

Note that, before performing the division processes of (a)/(b) shown in Fig. 7, a process for adjusting an exposure ratio between the long exposure image and the short exposure image is performed. Exposure ratio adjustment is performed in which the signal intensities (signal quantities) of either of the profiles are multiplied by a coefficient dependent on the exposure ratio. The division process is performed after this exposure ratio adjustment.

A specific example of the process will now be described.

Assume that, for example, the signal quantities of a specific row (p) in the row profile of R (red) among RGB are the signal quantity (RLp) of the long exposure image, and the signal quantity (RSp) of the short exposure image; and also that the exposure ratio between a long exposure image and a short exposure image is n : 1.

In this case, the correction coefficient RAp of a row (p) of R (red) is calculated by the following equation:

$$RAp = RSp/((RLp)/n)$$

Similar division processes are calculated for all the rows, thereby obtaining the flicker component for R (red) corresponding to one short exposure image, and then the phase inversion process on this flicker component allows the flicker correction coefficients ($\approx$ flicker correction waveforms) shown in Fig. 8(d) to be calculated.

This process is performed for all the colors of RGB, and thus, by the calculation processes of the flicker components for R (red), G (green), and B (blue) corresponding to one short exposure image, (c) flicker component data are calculated.

The flicker component data of (c) are the luminance distribution data corresponding only to the flicker components contained in (a) short exposure image.

Furthermore, performing the phase inversion process as shown in Fig. 8 on the flicker component data shown in (c) in Fig. 7 generates (d) flicker correction coefficients ($\approx$ flicker correction waveforms).

The flicker correction coefficients ($\approx$ flicker correction waveforms) of (d) correspond to data having inverse intensity distributions with respect to the flicker components contained in (a) short exposure image.

This process is performed on a plurality of short exposure images at minimum, and a plurality of flicker correction coefficients ($\approx$ flicker correction waveforms) are calculated.

The flicker correction coefficients ($\approx$ flicker correction waveforms) shown in Fig. 8(d) are signal patterns having inverted phases with respect to the signal components only of flicker, and thus the process to remove the flicker components can be achieved by multiplying the signals (pixel values) of each row of (a) short exposure image by the row-by-row correction coefficients of these (d) flicker correction coefficients ($\approx$ flicker correction waveforms).

However, although these flicker correction coefficients (≈ flicker correction waveforms) shown in Fig. 8(d) have the effects of the subject being substantially removed by the division processes of Fig. 7, the effects of saturated portions and/or dark portions in the image are contained therein, and thus only applying the image correction process will not yield good results of correction. An image processing apparatus of the present disclosure further performs processing on the flicker correction coefficients (≈ flicker correction waveforms) shown in Fig. 8(d), and calculates the final flicker correction waveforms. This process will be described later.

[2-3. Concerning Moving Subject Detection Process]

The description of the flicker correction sequence shown in Fig. 4 is continued.
After the calculation process of the flicker correction coefficients in step S102 completes, the process then proceeds to step S103.
In step S103, a moving subject detection process is performed. This is a detection process to determine whether or not any moving subject is contained in the captured image.
This is performed because the subsequent processes differ between when a moving subject is contained and when a moving subj ect is not contained.
The moving subject detection process in step S103 is performed as a comparison process between a difference in the row profiles of the respective image frames obtained in step S101 and a predetermined threshold value.
Note that the row profiles for performing the comparison process are those of a long exposure period image containing only a little effects of flicker.
For example, the row profiles of a plurality of long exposure images captured at times close to each other are compared, and difference data thereof is calculated.
Specifically, for example, a row profile (Xpro) of a long exposure image x captured at a capture time (tx), and a row profile (Ypro) of a long exposure image y captured at a capture time (ty), which is the next long exposure capture timing of the time (tx), are compared, and the difference between these row profiles is calculated.
A row profile is calculated as data for each color of RGB as described with reference to Figs. 5 and 6. Thus, for the two row profiles (Xpro and Ypro) to be compared, the difference of signal quantities for each of the colors and the rows is calculated, and then the integrated value Z, obtained by adding all these together, and a predetermined threshold value (Th) are compared.
If the integrated value Z is greater than or equal to the threshold value (Th), that is, if the equation

$$Z \geq Th$$

holds, then it is determined that a moving subject is contained.
If the above equation does not hold, then it is determined that a moving subject is not contained.

[2-4. Concerning Flicker Correction Process for Image Determined To Be Still Image]

The processes in steps S111 to S116 are performed as processes for a short exposure image which has been determined to be a still image, captured during capture timings of long exposure images which have been determined to contain no moving subjects in step S103.
First, in step S111, the plurality of flicker correction coefficients (≈ flicker correction waveforms) calculated in step S102 are combined, and a flicker correction waveform of at least one cycle is generated.
In this combination process, correct combination is achieved by taking into account the phases of the flicker correction coefficients (≈ flicker correction waveforms) corresponding to the respective images.

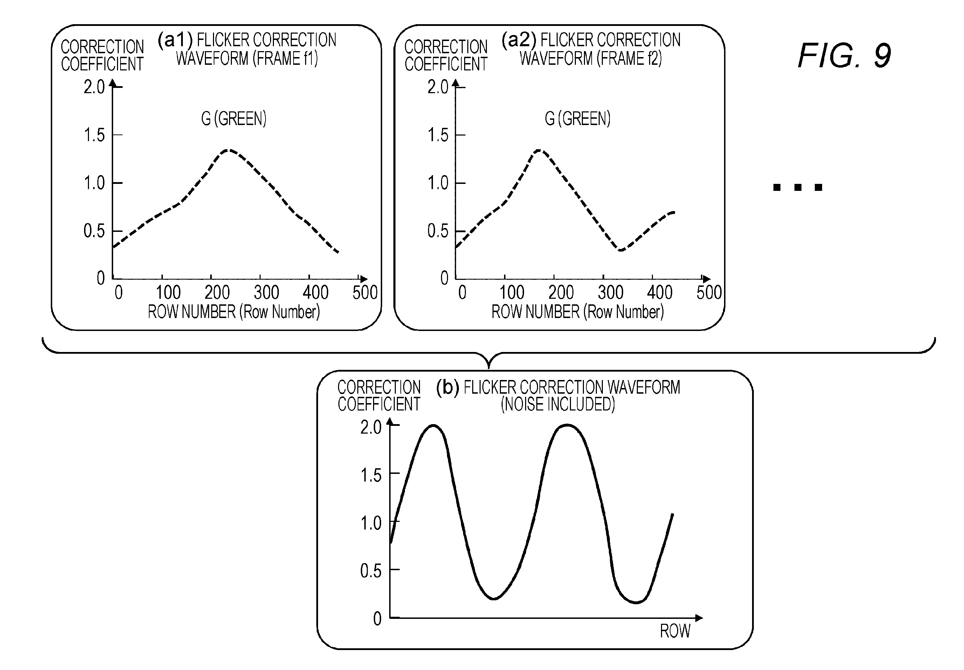

Fig. 9 illustrates an example of combination process on a plurality of flicker correction coefficients (≈ flicker correction waveforms).
Fig. 9 illustrates

(a1) the flicker correction coefficient (G (green)) of the short exposure image of a frame f1, and
(a2) the flicker correction coefficient (G (green)) of the short exposure image of a frame f2.

These are of short exposure images captured at different timings, and the waveforms of the row-by-row signal quantities affected by flicker do not coincide. That is, data having a phase difference is obtained.
By combining partial data of the plurality of flicker correction waveforms having a phase difference taking into account the phase difference, a correction waveform of at least one cycle is generated.

This combination process allows the flicker correction waveform shown in Fig. 9(b) to be obtained.

The flicker correction waveform shown in Fig. 9(b) is a waveform corresponding to the periodic luminance change due to flicker, that is, to the luminance change pattern of the fluorescent light.

However, this flicker correction waveform contains the effects of a saturated portion and/or a dark portion in an image, and does not coincide with a correction waveform which simply corresponds to flicker. That is, this is a flicker correction waveform having noise.

Returning to the sequence of Fig. 4, the sequence of the flicker correction process will be continued.

After one or more cycles of a flicker correction waveform is generated in step S111 as described with reference to Fig. 9, the process then proceeds to step S112.

In step S112, a process is performed in which one cycle of the flicker correction waveform is clipped from one or more cycles of the flicker correction waveform generated in step S111.

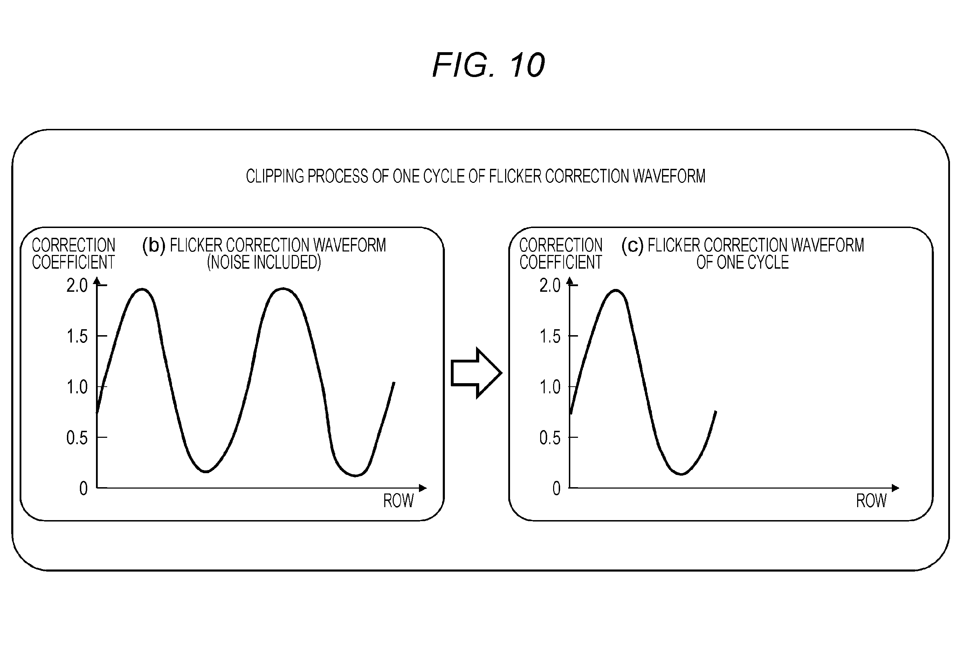

As shown in Fig. 10, one cycle of the flicker correction waveform is clipped.

Next, in steps S113 to S114, discrete Fourier transform (DFT) on one cycle of the flicker correction waveform is performed. In addition, a noise removal process or the like using the result of the DFT transformation is performed, and a sinusoidal approximation process is performed.

Specifically, for example, signal components are divided into first-to Nth-order component data by discrete Fourier transform (DFT) on one cycle of the flicker correction waveform. Then, the second- to (N-1)th-order component data are reclassified as either the first- or Nth-order component data. In this way, by performing a process to reclassify second- and higher-order components as, for example, a lower order, variation of the waveform amplitude can be prevented, and thus components that are estimated to be noise can be removed.

Further, gain adjustment as amplitude adjustment of the flicker waveform is performed, and a flicker correction waveform from which noise has been removed and on which sinusoidal approximation has been performed is generated.

Repeating one cycle of the flicker correction waveform on which sinusoidal approximation has been performed generates a plurality of cycles of the flicker correction waveform.

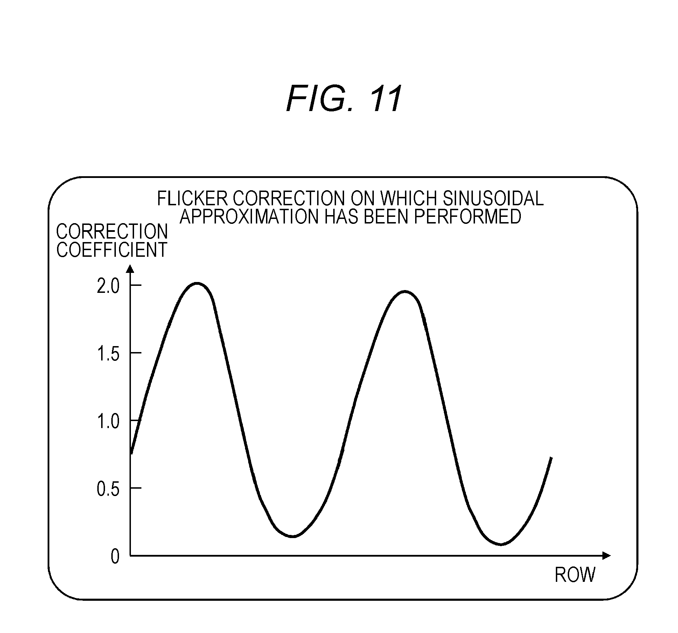

For example, the flicker correction waveform shown in Fig. 11 is generated.

This flicker correction waveform is a waveform corresponding to the light-dark cycle of the fluorescent light. That is, this is data representing the effects of flicker upon the pixel values in a captured image captured under the fluorescent light.

Note that, if, for example, a portion of data is lost during the flicker correction waveform generation process or the like, then a process to compensate the lost portion is performed by applying, for example, an interpolation process using the average value of previous and next values, a spline interpolation process, a linear interpolation process, or the like.

The flicker correction waveform obtained by this sinusoidal approximation has been described in terms of the generation process by applying the flicker correction coefficients shown in Fig. 8(d), which is generated by phase inversion of the flicker component data of Fig. 8(c) described above with reference to Fig. 8. However, even when sinusoidal approximation is directly performed using the flicker component data of Fig. 8 (c) without performing phase inversion on the flicker component data of Fig. 8(c), the same waveform itself can be obtained with the only difference in phase, and thus the configuration may be such that the flicker correction waveform on which the sinusoidal approximation shown in Fig. 11 has been performed is generated using the flicker component data of Fig. 8 (c) without performing the phase inversion process of Fig. 8(d).

Next, in step S115, flicker correction is performed on each of the short exposure images by applying the flicker correction waveform generated in step S114.

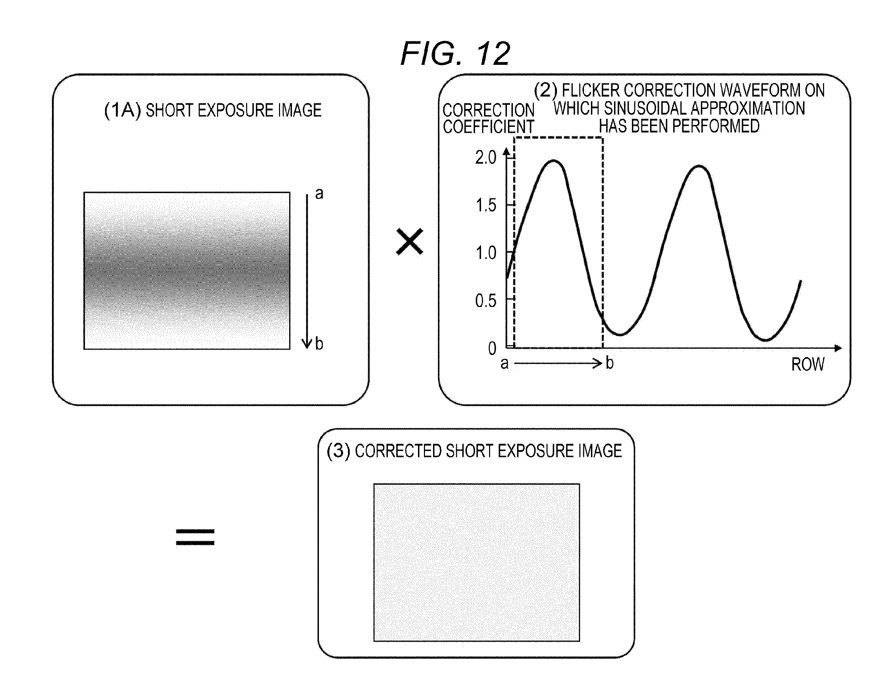

A specific example of a flicker correction process applying the flicker correction waveform will now be described with reference to Fig. 12.

Fig. 12 illustrates

(1A) a short exposure image on which flicker correction will be performed,
(2) a flicker correction waveform (= the flicker correction waveform shown in Fig. 11), and
(3) a corrected short exposure image after the flicker correction.

The short exposure image shown in Fig. 12(1A) contains an evident wave of high and low signal values (pixel values) due to the effects of flicker on a row-by-row basis, due to the effects of flicker.

Let row "a" denote the top of the image, and row "b" denote the bottom of the image. Rows a to b contain an evident wave of high and low signal values (pixel values) estimated to be due to the effects of flicker.

In order to remove these effects of flicker, signal processing using the flicker correction waveform generated in steps S113 to S114 is performed.

As described above with reference to Fig. 8, the flicker correction waveform is a signal having an inverted phase with respect to the flicker component signal.

Accordingly, multiplication of the pixel values of each row of a short exposure image affected by flicker by a coefficient corresponding to the flicker correction waveform formed of the flicker correction coefficients allows a corrected image having the effects of flicker removed to be generated.

Note that, in this multiplication process by a coefficient corresponding to the flicker correction waveform, the phase of the flicker correction waveform needs to be aligned with the phase of the flicker in the short exposure image on which flicker correction is performed.

For this phase adjustment, for example, a process is effective in which the flicker correction coefficient data corresponding to a short exposure image generated in step S102 and the peak of the flicker correction waveform are aligned, and further, the clip range of the flicker correction waveform is set depending on the exposure period of the short exposure image.

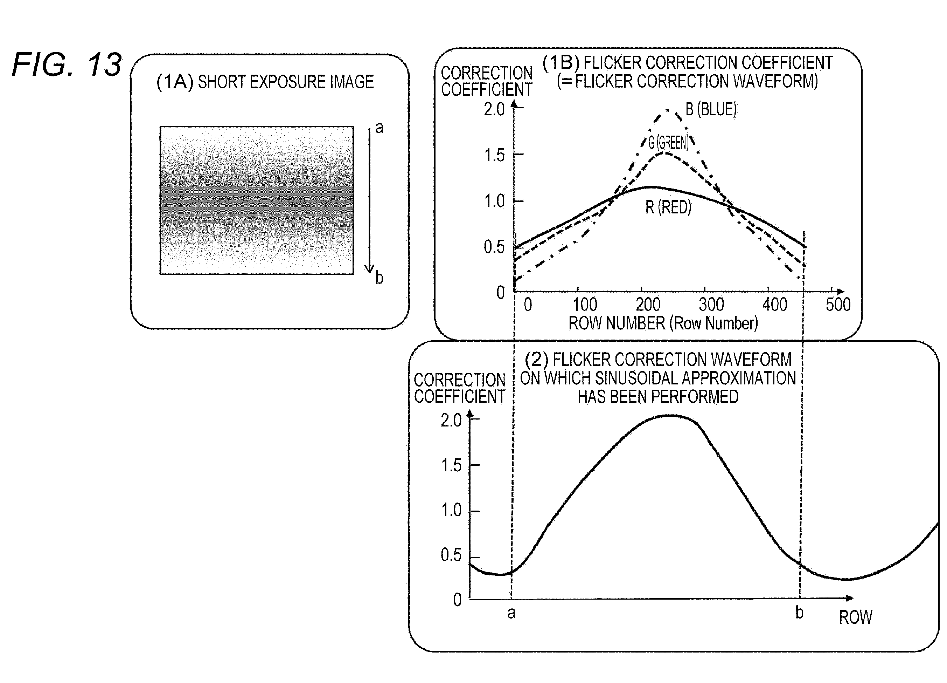

Specifically, as shown in Fig. 13, (1B) flicker correction coefficient data corresponding to (1A) short exposure image and the peak of (2) flicker correction waveform are aligned, and further, the clip range of the flicker correction waveform is set depending on the exposure period of the short exposure image.

With such a process, the clip range of the flicker correction waveform is determined, and the multiplication coefficient corresponding to the flicker correction waveform clipped is set on a row-by-row basis, and then the pixel values of each row of (1A) short exposure image are multiplied; thus the corrected pixel values are calculated.

In step S115, the corrected image is generated by such a process.

In this way, the signal processing unit 102 performs phase matching for aligning the peak location of the row profile of the image to be corrected with the peak location of the flicker correction waveform, and performs a process of multiplying the pixel values of each row of the short exposure image by the row-by-row coefficient corresponding to the flicker correction waveform, thereby generating the corrected image whose flicker components have been eliminated.

Note that the flicker correction process in step S115 can be performed on images which have been determined to contain no moving subjects, among images captured under the same environment, by applying the flicker correction waveform.

Note that this is because flicker patterns having a same cycle appear in images captured under a same fluorescent light, and thus after one flicker correction waveform is generated, that flicker correction waveform can be applied to perform correction on images captured thereafter under the same environment.

However, when extracting the application range of flicker correction for each of the short exposure images, phase adjustment needs to be performed in which the peak location of the row profile of each image to be processed and the peak location of the flicker correction waveform are aligned, as described with reference to Fig. 13.

The flicker correction waveform generated in step S114 is stored in the memory in step S116, and is used for correction of each of the captured images.

[2-5. Concerning Flicker Correction Process for Image Containing Moving Subject]

Next, the processes in steps S121 to S122 of the sequence diagram shown in Fig. 4 will be described.

These processes are processes when it is determined in step S103 that the captured image contains a moving subject.

The processes in steps S121 to S122 are performed as processes for a short exposure image captured during the capture period of the plurality of long exposure images which have been applied to the moving subj ect detection process in step S103.

For example, if a bright subject moves in a vertical direction of the image, or if a dark subj ect moves in a vertical direction, then a row-by-row luminance change dependent on the movement of the subject, as well as due to the effects of flicker, occurs in the captured image.

When such a luminance change due to a moving subject is contained, even if the division process described above with reference to Fig. 7, that is,

$$(\text{row profile of a short exposure image}) / (\text{row profile of a long exposure image})$$

is performed using the row profile generated from the long exposure image as the reference profile, the flicker component data of Fig. 7(c) and the flicker correction waveform shown in Fig. 8(d) become data that include errors associated with the movement of the moving subject.

If the correction process described above with reference to Figs. 12 and 13, that is, the correction process in which the peak location of the row profile of the image to be corrected containing a moving subject and the peak location of the flicker correction waveform generated based on a still image are aligned, is performed by applying such a flicker correction waveform containing the effects of movement of a moving subject, the effects of the moving subject may prevent a good flicker correction from being provided.

The processes in steps S121 to S122 are the processes that are performed on a short exposure image determined to contain a moving subject, in order to solve these problems.

In step S121, the flicker correction waveform is read from the memory.

This flicker correction waveform is the flicker correction waveform generated based on an image determined to be a still image in the processes in steps S111 to S114.

Next, in step S122, an adjustment process is performed in which the flicker correction waveform read from the memory is shaped into a flicker correction waveform applicable to moving-subject captured images.

This adjustment process uses a plurality of short exposure images in a predetermined time period during which a moving subject is captured.

Phase control is performed in which a flicker correction waveform (= moving-subject image flicker correction waveform) generated by combining the row profiles of the plurality of respective short exposure images in the predetermined time period during which the moving subject is captured, and the flicker correction waveform read from the memory are compared, and the phase of the flicker correction waveform read from the memory is aligned with the phase of the moving-subject image flicker correction waveform.

In step S115, an image correction process is performed in which the phase-controlled flicker correction waveform generated in step S122 is applied to the short exposure images containing a moving subject.

This image correction process is a process similar to that described above with reference to Figs. 12 and 13 except that the phase-controlled flicker correction waveform is applied.

In this way, it is determined whether or not the short exposure images to be corrected contain a moving subject, and as for the images determined to contain a moving subject, the flicker correction waveform is clipped so as to align in phase with the images containing a moving subject based on the inter-frame phase mismatch calculated based on the still images, and then the flicker correction waveform clipped is applied.

In this way, the flicker-corrected output image 202 is generated and output.

Note that, as described above, this process may be configured such that an independent correction coefficient is calculated for each of the color signals (color channels), and the correction process is performed for each of the color signals, or such that a common correction coefficient which is set on a row-by-row basis without distinguishing color signals is applied to all the constituting pixels of the row.

If the correction process is performed for each of the color signals, then the integrated values of a row-by-row signal quantity are calculated individually for each of the color signals (color channels), and the individual flicker component and flicker correction waveform for each of the color signals are calculated.

If a common correction coefficient which is set on a row-by-row basis without distinguishing the color signals is used, then the integrated values of a row-by-row signal quantity are calculated without distinguishing the color signals (color channels), and the row-by-row flicker component and flicker correction waveform are calculated.

As described above, a configuration of the present disclosure allows flicker components that reproduce the luminance change of the actual light to be analyzed, and a correction process by the flicker correction coefficients based on this accurate flicker waveform to be performed, thereby allowing the flicker removal process to be more effectively performed.

In addition, since the configuration is such that, in order to generate a flicker correction waveform, the row profile of a long exposure image captured at a time close to the short exposure image on which flicker correction is performed is used as the reference profile, the conventional generation process of the reference profile by integrating previous images is no more required, and therefore an effective correction process is achieved. Moreover, a problem has existed in that a long-cycle flicker cannot be removed if a reference profile generated by integrating previous images containing a large number of effects of flicker; however, a configuration of the present disclosure allows the removal effect on long-cycle flicker to be enhanced by using a long exposure image containing little effects of flicker in nature as the reference image.

[3. Summary of Configuration of the Present Disclosure]

A configuration of the present disclosure has been described above in detail with reference to specific embodiments thereof. It is obvious, however, that modifications and substitutions in the embodiments may be made by those skilled in the art without departing from the spirit of the present disclosure. That is, the present invention has been disclosed in a form that is illustrative and is not to be construed in a restrictive manner. In order to determine the spirit of the present invention, the section of claims is to be considered.

Note that the technology disclosed herein can be implemented in the following configurations.

(1) An image processing apparatus including:

a signal processing unit configured to receive a short exposure image and a long exposure image, which are images captured with at least two different exposure periods, and perform a flicker correction process of eliminating a flicker component contained in the short exposure image, wherein

the signal processing unit

generates

a short exposure image row profile having integrated values of a row-by-row signal quantity of the short exposure image, and

a reference profile having integrated values of a row-by-row signal quantity of the long exposure image,

generates a flicker correction waveform by data processing including a division process on the short exposure image row profile by the reference profile, and

generates a corrected image whose flicker component has been eliminated by a process of multiplying pixel values of each of rows of the short exposure image by a row-by-row coefficient corresponding to the flicker correction waveform.

(2) The image processing apparatus according to (1), wherein

the long exposure image is an image captured using a setting of the exposure period which is approximately equal to an integral multiple of a luminance change cycle of an image capture environment.

(3) The image processing apparatus according to (1) or (2), wherein

in a generation process of the flicker correction waveform,

the signal processing unit generates the flicker correction waveform by performing a sinusoidal approximation process on flicker component data obtained by the division process on the short exposure image row profile by the reference profile, or on phase-inverted data with respect to the flicker component data.

(4) The image processing apparatus according to any of (1) to (), wherein

in a generation process of the flicker correction waveform,

the signal processing unit generates the flicker correction waveform by performing a spline interpolation process on flicker component data obtained by the division process on the short exposure image row profile by the reference profile, or on phase-inverted data with respect to the flicker component data.

(5) The image processing apparatus according to any of (1) to (4), wherein

in a generation process of the flicker correction waveform,

the signal processing unit generates the flicker correction waveform by performing a linear interpolation process on flicker component data obtained by the division process on the short exposure image row profile by the reference profile, or on phase-inverted data with respect to the flicker component data.

(6) The image processing apparatus according to any of (1) to (5), wherein

in a generation process of the flicker correction waveform,

the signal processing unit performs discrete Fourier transform on flicker component data obtained by the division process on the short exposure image row profile by the reference profile, or on phase-inverted data with respect to the flicker component data, and reclassifies second- and higher-order components as a lower order.

(7) The image processing apparatus according to any of (1) to (6), wherein

in a generation process of the corrected image whose flicker component has been eliminated,

the signal processing unit performs the process of multiplying pixel values of each of rows of the short exposure image by a row-by-row coefficient corresponding to the flicker correction waveform after phase matching for aligning a peak location of a row profile of an image to be corrected with a peak location of the flicker correction waveform.

(8) The image processing apparatus according to any of (1) to (7), wherein

the signal processing unit determines whether each image contains a moving subject or not, and performs a generation process of the flicker correction waveform by applying an image determined to contain no moving subjects.

(9) The image processing apparatus according to any of (1) to (9), wherein

the signal processing unit determines whether or not a short exposure image to be corrected contains a moving subj ect, and performs image correction applying the flicker correction waveform to an image determined to contain no moving subjects.

(10) The image processing apparatus according to any of (1) to (9), wherein

the signal processing unit determines whether or not a short exposure image to be corrected contains a moving subject, and with respect to an image determined to contain a moving subj ect, modifies the flicker correction waveform taking into account a phase variation in a row profile due to an effect of the moving subj ect, and performs image correction applying a modified flicker correction waveform.

(11) The signal processing unit determines whether or not a short exposure image to be corrected contains a moving subject, and with respect to an image determined to contain a moving subject, clips the flicker correction waveform so as to align in phase with the image containing a moving subject based on an inter-frame phase mismatch calculated based on a still image, and performs image correction applying a clipped flicker correction waveforms.

Moreover, a method of processing to be performed in the apparatus or the like described above, and a program for performing the processing are within the scope of the configuration of the present disclosure.

Furthermore, the set of processes described herein may be performed by hardware, software, or a combined configuration thereof. If the processes are performed using software, the processes can be performed by installing a program into which the process sequence has been coded, in a memory in a computer embedded in dedicated hardware, or can be performed by installing the program in a general-purpose computer that can execute various processes. For example, the program may be pre-recorded in a storage medium. The program may not only be installed in a computer from the storage medium, but also be received via network such as a local area network (LAN) and the Internet, and then be installed in a storage medium such as an internal hard disk drive.

Note that the various processes described herein may not only be performed sequentially in time according to the description, but also be performed in parallel or individually based on the processing capacity of the apparatus which performs the processes, or as needed. In addition, as used in the specification, a system refers to a logical set of a plurality of apparatuses, and is not limited to an apparatus that houses elements in the same casing.

INDUSTRIAL APPLICABILITY

As described above, according to the configuration of one embodiment of the present disclosure, an apparatus and a method capable of eliminating flicker effectively.

Specifically, flicker which occurs in a captured image captured under a lighting environment such as a fluorescent light having a luminance change is effectively eliminated or reduced. A short exposure image and a long exposure image, which are images captured with at least two different exposure periods, are input, a short exposure image row profile having integrated values of a row-by-row signal quantity of the short exposure image and a reference profile having integrated values of a row-by-row signal quantity of the long exposure image are generated, a flicker correction waveform is generated by a division process on the short exposure image row profile by the reference profile or the like, and a corrected image is generated whose flicker components have been eliminated by a process of multiplying pixel values of each of the rows of the short exposure image by a row-by-row coefficient defined by the flicker correction waveform.

These processes achieve an apparatus and a method capable of eliminating flicker effectively.

REFERENCE SIGNS LIST

| | |
|---|---|
| 100 | Imaging Apparatus |
| 101 | Imaging Unit |
| 102 | Signal Processing Unit |
| 103 | Codec |
| 104 | Recording and Reproduction Unit |
| 120 | Recording Medium |
| 130 | Display Unit |
| 150 | Control Unit |
| 151 | Memory |

**Claims**

1. An image processing apparatus comprising:

   a signal processing unit configured to receive a short exposure image and a long exposure image, which are images captured with at least two different exposure periods, and perform a flicker correction process of eliminating a flicker component contained in the short exposure image, wherein
   the signal processing unit
   generates
   a short exposure image row profile having integrated values of a row-by-row signal quantity of the short exposure image, and
   a reference profile having integrated values of a row-by-row signal quantity of the long exposure image,
   generates a flicker correction waveform by data processing including a division process on the short exposure image row profile by the reference profile, and
   generates a corrected image whose flicker component has been eliminated by a process of multiplying pixel values of each of rows of the short exposure image by a row-by-row coefficient corresponding to the flicker correction waveform.

2. The image processing apparatus according to claim 1, wherein
   the long exposure image is an image captured using a setting of the exposure period which is approximately equal to an integral multiple of a luminance change cycle of an image capture environment.

3. The image processing apparatus according to claim 1, wherein
   in a generation process of the flicker correction waveform,
   the signal processing unit generates the flicker correction waveform by performing a sinusoidal approximation process on flicker component data obtained by the division process on the short exposure image row profile by the reference profile, or on phase-inverted data with respect to the flicker component data.

4. The image processing apparatus according to claim 1, wherein
   in a generation process of the flicker correction waveform,
   the signal processing unit generates the flicker correction waveform by performing a spline interpolation process on flicker component data obtained by the division process on the short exposure image row profile by the reference profile, or on phase-inverted data with respect to the flicker component data.

5. The image processing apparatus according to claim 1, wherein
   in a generation process of the flicker correction waveform,
   the signal processing unit generates the flicker correction waveform by performing a linear interpolation process on flicker component data obtained by the division process on the short exposure image row profile by the reference profile, or on phase-inverted data with respect to the flicker component data.

6. The image processing apparatus according to claim 1, wherein
   in a generation process of the flicker correction waveform,
   the signal processing unit performs discrete Fourier transform on flicker component data obtained by the division process on the short exposure image row profile by the reference profile, or on phase-inverted data with respect to the flicker component data, and reclassifies second- and higher-order components as a lower order.

7. The image processing apparatus according to claim 1, wherein
   in a generation process of the corrected image whose flicker component has been eliminated,
   the signal processing unit performs the process of multiplying pixel values of each of rows of the short exposure image by a row-by-row coefficient corresponding to the flicker correction waveform after phase matching for aligning a peak location of a row profile of an image to be corrected with a peak location of the flicker correction waveform.

8. The image processing apparatus according to claim 1, wherein
   the signal processing unit determines whether each image contains a moving subject or not, and performs a generation process of the flicker correction waveform by applying an image determined to contain no moving subjects.

9. The image processing apparatus according to claim 1, wherein
   the signal processing unit determines whether or not a short exposure image to be corrected contains a moving subject, and performs image correction applying the flicker correction waveform to an image determined to contain no moving subjects.

10. The image processing apparatus according to claim 1, wherein
    the signal processing unit determines whether or not a short exposure image to be corrected contains a moving subject, and with respect to an image determined to contain a moving subject, modifies the flicker correction waveform taking into account a phase variation in a row profile due to an effect of the moving subject, and performs image correction applying a modified flicker correction waveform.

11. The image processing apparatus according to claim 1, wherein
    the signal processing unit determines whether or not a short exposure image to be corrected contains a moving subject, and with respect to an image determined to contain a moving subject, clips the flicker correction waveform so as to align in phase with the image containing a moving subject based on an inter-frame phase mismatch calculated based on a still image, and performs image correction applying a clipped flicker correction waveform.

**12.** An image processing method performed in an image processing apparatus, comprising:

performing a signal processing step in which a signal processing unit receives a short exposure image and a long exposure image, which are images captured with at least two different exposure periods, and performs a flicker correction process of eliminating a flicker component contained in the short exposure image, wherein the signal processing step includes performing

a generation process of a short exposure image row profile having integrated values of a row-by-row signal quantity of the short exposure image, and a reference profile having integrated values of a row-by-row signal quantity of the long exposure image,

a generation process of a flicker correction waveform by data processing including a division process on the short exposure image row profile by the reference profile, and

a generation process of a corrected image whose flicker component has been eliminated by a process of multiplying pixel values of each of rows of the short exposure image by a row-by-row coefficient corresponding to the flicker correction waveform.

**13.** A program for implementing a flicker correction process of eliminating a flicker component contained in an image in an image processing apparatus, wherein

the program

causes a signal processing unit to receive a short exposure image and a long exposure image, which are images captured with at least two different exposure periods, and

instructs the signal processing unit to perform

a generation process of a short exposure image row profile having integrated values of a row-by-row signal quantity of the short exposure image, and a reference profile having integrated values of a row-by-row signal quantity of the long exposure image,

a generation process of a flicker correction waveform by data processing including a division process on the short exposure image row profile by the reference profile, and

a generation process of a corrected image whose flicker component has been eliminated by a process of multiplying pixel values of each of rows of the short exposure image by a row-by-row coefficient corresponding to the flicker correction waveform.

# FIG. 1

(a) LUMINANCE — FLUORESCENT LIGHT 100 Hz

(b) PATTERN DIAGRAM OF IMAGING BY CMOS IMAGE SENSOR (60 fps)

DARK BRIGHT DARK BRIGHT DARK BRIGHT DARK BRIGHT DARK BRIGHT DARK BRIGHT DARK — TOP ROW

P Q R

FRAME INTERVAL

(Row)

BOTTOM ROW

RESET READ EXPOSURE PERIOD EXPOSURE PERIOD EXPOSURE PERIOD

(c) READ TIMING

READ READ READ READ TIME

1/20 sec.

(d) OUTPUT IMAGE

FRAME #1  FRAME #2  FRAME #3  FRAME #4

P Q R

TOP ROW

(Row)

BOTTOM ROW

EP 2 790 399 A1

# FIG. 2

## FIG. 3

IMAGE CAPTURE SEQUENCE AT 120 fps UNDER OPERATION OF 120 Hz FLUORESCENT LIGHT (POWER SUPPLY FREQUENCY = 60 Hz)

LUMINANCE

(a) FLUORESCENT LIGHT
120 Hz
( POWER SUPPLY
FREQUENCY 60 Hz )

DARK BRIGHT DARK BRIGHT DARK BRIGHT DARK BRIGHT DARK BRIGHT DARK BRIGHT DARK BRIGHT DARK BRIGHT DARK BRIGHT DARK BRIGHT DARK BRIGHT DARK BRIGHT DARK

EXPOSURE PERIOD (t1) OF SHORT EXPOSURE IMAGE

EXPOSURE PERIOD (t2) OF LONG EXPOSURE IMAGE

(t1)   (t2)

TOP ROW

(b) IMAGING SEQUENCE OF IMAGING DEVICE (120 fps)

(Row)

RESET

READ AND RESET

READ

BOTTOM ROW

READ SHORT EXPOSURE IMAGE

READ SHORT EXPOSURE IMAGE

SHORT

SHORT

SHORT

SHORT

READ LONG EXPOSURE IMAGE

READ LONG EXPOSURE IMAGE

LONG

LONG

LONG

LONG

1/20 sec.

1/10 sec.

time

EP 2 790 399 A1

## FIG. 4

201
INPUT IMAGE (RAW)

→

S101
GENERATE RowProfile

→

S102
CALCULATE FLICKER CORRECTION COEFFICIENTS

→

S103
DETECT MOVING SUBJECT BY RowProfile DIFFERENCE BETWEEN FRAMES

S116
STORE FLICKER CORRECTION WAVEFORM IN MEMORY

STATIONARY

S111
COMPOSE FLICKER CORRECTION COEFFICIENTS

→

S112
CLIP ONE CYCLE OF CORRECTION WAVEFORM

→

S113
GENERATE WAVEFORM WITH SINUSOIDAL APPROXIMATION APPLIED, BY DFT PROCESS, GAIN ADJUSTMENT AND THE LIKE

→

S114
GENERATE FLICKER CORRECTION WAVEFORM

MOVING SUBJECT

S121
READ FLICKER CORRECTION WAVEFORM FROM MEMORY

→

S122
SHIFT CORRECTION WAVEFORM BASED ON PHASE DIFFERENCE

→

S115
APPLY FLICKER CORRECTION WAVEFORM TO IMAGE

→

202
OUTPUT IMAGE (RAW)

EP 2 790 399 A1

## FIG. 5

SIGNAL QUANTITY
(Intencity)

1000

800

600

400

200

0

0    100    200    300    400    500

ROW NUMBER (Row Number)

G (GREEN)

B (BLUE)

R (RED)

G (GREEN)

B (BLUE)

R (RED)

EP 2 790 399 A1

*FIG. 6*

(a) SHORT EXPOSURE IMAGE
AND ROW PROFILE DATA

LUMINANCE DISTRIBUTION CHARACTERISTIC
DATA OF SHORT EXPOSURE IMAGE

SIGNAL
QUANTITY
(Intencity)

ROW PROFILE

1000

800    G (GREEN)

600    B (BLUE)

400

200    R (RED)

0
0    100    200    300    400    500
ROW NUMBER (Row Number)

(b) LONG EXPOSURE IMAGE
AND ROW PROFILE DATA

LUMINANCE DISTRIBUTION CHARACTERISTIC
DATA OF LONG EXPOSURE IMAGE

SIGNAL
QUANTITY
(Intencity)

ROW PROFILE (=REFERENCE PROFILE)

1000

800    G (GREEN)

600    B (BLUE)

400

200    R (RED)

0
0    100    200    300    400    500
ROW NUMBER (Row Number)

EP 2 790 399 A1

FIG. 7

(a) ROW PROFILE OF SHORT EXPOSURE IMAGE

SIGNAL QUANTITY (Intencity)

G (GREEN)
B (BLUE)
R (RED)

ROW NUMBER (Row Number)

(b) ROW PROFILE OF LONG EXPOSURE IMAGE (= REFERENCE PROFILE)

SIGNAL QUANTITY (Intencity)

G (GREEN)
B (BLUE)
R (RED)

ROW NUMBER (Row Number)

(c) FLICKER COMPONENT

FLICKER GAIN

R (RED)
G (GREEN)
B (BLUE)

ROW NUMBER (Row Number)

FIG. 8

(c) FLICKER COMPONENT

FLICKER GAIN

R (RED)
G (GREEN)
B (BLUE)

ROW NUMBER (Row Number)

PHASE INVERSION

(d) FLICKER CORRECTION COEFFICIENT
(= FLICKER CORRECTION WAVEFORM)

CORRECTION
COEFFICIENT

B (BLUE)
G (GREEN)
R (RED)

ROW NUMBER (Row Number)

EP 2 790 399 A1

(a1) FLICKER CORRECTION WAVEFORM (FRAME f1)

CORRECTION COEFFICIENT

G (GREEN)

ROW NUMBER (Row Number)

(a2) FLICKER CORRECTION WAVEFORM (FRAME f2)

CORRECTION COEFFICIENT

G (GREEN)

ROW NUMBER (Row Number)

(b) FLICKER CORRECTION WAVEFORM (NOISE INCLUDED)

CORRECTION COEFFICIENT

ROW

FIG. 9

FIG. 10

CLIPPING PROCESS OF ONE CYCLE OF FLICKER CORRECTION WAVEFORM

CORRECTION COEFFICIENT (b) FLICKER CORRECTION WAVEFORM (NOISE INCLUDED)

CORRECTION COEFFICIENT (c) FLICKER CORRECTION WAVEFORM OF ONE CYCLE

EP 2 790 399 A1

EP 2 790 399 A1

## FIG. 11

FLICKER CORRECTION ON WHICH SINUSOIDAL
APPROXIMATION HAS BEEN PERFORMED

CORRECTION
COEFFICIENT

ROW

# FIG. 12

(1A) SHORT EXPOSURE IMAGE

a

b

×

(2) FLICKER CORRECTION WAVEFORM ON
CORRECTION WHICH SINUSOIDAL APPROXIMATION
COEFFICIENT HAS BEEN PERFORMED

2.0

1.5

1.0

0.5

0

a ——→ b          ROW

=

(3) CORRECTED SHORT EXPOSURE IMAGE

EP 2 790 399 A1

*FIG. 13*

(1A) SHORT EXPOSURE IMAGE

(1B) FLICKER CORRECTION COEFFICIENT
(= FLICKER CORRECTION WAVEFORM)

(2) FLICKER CORRECTION WAVEFORM
ON WHICH SINUSOIDAL APPROXIMATION
HAS BEEN PERFORMED

EP 2 790 399 A1

## INTERNATIONAL SEARCH REPORT

| | International application No. |
|---|---|
| | PCT/JP2012/077193 |

A. CLASSIFICATION OF SUBJECT MATTER

*H04N5/351(2011.01)i, H04N5/243(2006.01)i*

According to International Patent Classification (IPC) or to both national classification and IPC

B. FIELDS SEARCHED

Minimum documentation searched (classification system followed by classification symbols)
H04N5/351, H04N5/243

Documentation searched other than minimum documentation to the extent that such documents are included in the fields searched

| Jitsuyo Shinan Koho | 1922-1996 | Jitsuyo Shinan Toroku Koho | 1996-2012 |
|---|---|---|---|
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-346096 A (Matsushita Electric Industrial Co., Ltd.), 14 December 2001 (14.12.2001), paragraphs [0052] to [0056]; fig. 1 to 3 (Family: none) | 1-13 |
| Y | JP 2011-160090 A (Sony Corp.), 18 August 2011 (18.08.2011), paragraphs [0011], [0022], [0024], [0037], [0052] to [0055], [0083] to [0090], [0104] to [0105], [0107] to [0108], [0115] & EP 2393284 A1 & WO 2011/093112 A1 & CN 102356631 A | 1-13 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 09 November, 2012 (09.11.12) | 20 November, 2012 (20.11.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/077193

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-81684 A (Panasonic Corp.), 16 April 2009 (16.04.2009), paragraphs [0052] to [0053], [0076] to [0078], [0088], [0101], [0111]; fig. 1 to 7 (Family: none) | 9-10 |
| Y | JP 2008-236300 A (Matsushita Electric Industrial Co., Ltd.), 02 October 2008 (02.10.2008), paragraphs [0020] to [0021]; fig. 5 (Family: none) | 9,11 |
| A | JP 11-75109 A (Matsushita Electric Industrial Co., Ltd.), 16 March 1999 (16.03.1999), paragraphs [0017] to [0018]; fig. 1 (Family: none) | 1-13 |
| A | JP 2006-245784 A (Canon Inc.), 14 September 2006 (14.09.2006), paragraphs [0017], [0024], [0046], [0051]; fig. 3, 8 to 9 (Family: none) | 1-13 |
| A | JP 2004-7402 A (Seiko Epson Corp.), 08 January 2004 (08.01.2004), paragraph [0014] & US 2004/0012692 A1 | 1-13 |
| A | JP 2009-124239 A (Canon Inc.), 04 June 2009 (04.06.2009), paragraphs [0007] to [0009], [0043], [0049] to [0051] & US 2009/0122155 A1 | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11122513 A

- JP 2002165141 A